# EUROPÄISCHE PATENTSCHRIFT

(11) **EP 1 253 367 B1**
(45) Veröffentlichungstag und Bekanntmachung des Hinweises auf die Patenterteilung: **10.08.2005**
(21) Anmeldenummer: 02006695.7
(22) Anmeldetag: 27.03.2002
(51) Int. Cl.: F16L 37/00, F16L 41/08, F16L 47/00

(54) **Vorrichtung zur Verbindung einer pneumatischen Leitung**
Device for connecting pneumatic pipes
nppareil pour la connexion d'un conduit pneumatique

(30) Priorität: 27.04.2001 DE 10120707
(43) Veröffentlichungstag der Anmeldung: 30.10.2002
(73) Patentinhaber: ROBERT BOSCH GMBH, 70442 Stuttgart (DE)
(72) Erfinder: Bergmann, Klaus, 70499 Stuttgart (DE)
(74) Vertreter: Maiwald Patentanwalts GmbH

(56) Entgegenhaltungen:
- CH-A- 675 902
- DE-U- 8 810 285
- GB-A- 2 125 131
- US-A- 4 790 573
- US-A- 4 801 162

## Beschreibung

### Stand der Technik

Die Erfindung geht von einer Vorrichtung zur Verbindung mindestens einer pneumatischen Leitung mit einer pneumatischen Baueinheit gemäß der im Oberbegriff des Patentanspruches 1 näher definierten Art aus.

Eine derartige Vorrichtung ist aus der Praxis bekannt und beispielsweise als Anschlußplatte für ein Pneumatikventil ausgebildet, das in Verbindung mit Spann- oder Haltevorrichtung einsetzbar ist.

Die Anschlußplatte bzw. Adapterplatte, die aus Kunststoff gefertigt sein kann, umfaßt bzw. bildet ein sogenanntes Anschlußgehäuseteil, in dem beispielsweise zwei Aufnahmeräume für jeweils eine Anschlußbuchse zum Anschluß einer pneumatischen Leitung ausgebildet sind. Der Aufnahmeraum des Anschlussgehäuseteils wird bisher in Abhängigkeit vom eingesetzten Verbindungstyp, d.h. in Abhängigkeit vom Durchmesser bzw. von der Art (Schraub- oder Steckverbindung) des in der Anschlussbuchse zu befestigenden Verbindungsstücks der anzuschließenden Leitung ausgelegt. Dies bedeutet, dass bisher für jeden Typ von Anschlussbuchse eine gesonderte Anschluss- bzw. Adapterplatte vorgehalten werden muss. Dies ist wiederum kostenintensiv.

Aus der US 4,790,573 geht eine gattungsgemäße Vorrichtung zur Verbindung einer pneumatischen Leitung mit einer pneumatischen Baueinheit hervor. Ein Anschlussgehäuseteil der pneumatischen Baueinheit ist hier zu diesem Zwecke mit einem abgestuften Aufnahmeraum für eine korrespondierende Anschlussbuchse ausgestattet. Der Aufnahmeraum dient hier zur wahlweisen Aufnahme einer als Gewindebuchse ausgelegten Anschlussbuchse. Nachteilig hierbei ist jedoch, dass keine Mittel zur Verdrehsicherung vorgesehen sind.

Es ist daher die Aufgabe der vorliegenden Erfindung, eine derartige Vorrichtung zur Verbindung mindestens einer pneumatischen Leitung mit einer pneumatischen Baueinheit dahingehend weiter zu verbessern, dass eine universelle Anschlussmöglichkeit mit einer einfachen und wirkungsvollen Verdrehsicherung geschaffen wird.

### Vorteile der Erfindung

Die erfindungsgemäße Vorrichtung zur Verbindung mindestens einer pneumatischen Leitung mit einer pneumatischen Baueinheit mit den Merkmalen nach dem Oberbegriff des Patentanspruchs 1, bei dem der Aufnahmeraum zur wahlweisen Aufnahme einer als Steckanschlussbuchse, als Adapterbuchse oder als Gewindebuchse ausgelegten Anschlussbuchse ausgebildet ist, hat demgegenüber den Vorteil, dass aufgrund der Tatsache, dass in dem Aufnahmeraum entweder eine Steckanschlussbuchse, eine Adapterbuchse oder eine Gewindebuchse angeordnet werden kann, nur ein Anschlussgehäuseteil vorgehalten werden muss und dieses in Abhängigkeit vom spezifischen Einsatzzweck mit der jeweils erforderlichen Anschlussbuchse versehen werden kann. Dies führt zu erheblichen Kosteneinsparungen auf Herstellerseite, da nur noch ein Werkzeug, beispielsweise nur eine Spritzgießform, zur Herstellung eines Anschlussgehäuseteils erforderlich ist.

Die Vorrichtung nach der Erfindung kann in Verbindung mit einer Vielzahl pneumatischer Baueinheiten, beispielsweise mit einem pneumatischen Steuerblock, mit einem Pneumatikventil oder dergleichen eingesetzt werden oder auch Bestandteil derartige Baueinheiten sein. In letzterem Fall ist das Anschlußgehäuseteil von einem Gehäusebereich der pneumatischen Baueinheit selbst gebildet.

Nach einer bevorzugten Ausführungsform der Vorrichtung nach der Erfindung ist die Anschlußbuchse als Einpreßbuchse ausgebildet. Eine derartige Anschlußbuchse kann beispielsweise nach einem Einpreßverfahren auf einfache Weise in dem Aufnahmeraum des Anschlußgehäuseteils fixiert werden.

Zweckmäßigerweise weist die Einpreßbuchse an der Umfangsfläche mindestens einen Ringbund auf, der mit einer Schneidkante ausgebildet sein kann. Insbesondere wenn das Anschlußgehäuseteil aus Kunststoff gefertigt ist, ist dann dadurch ein sicherer Sitz der Anschlußbuchse in dem Aufnahmeraum gewährleistet, daß sich der Ringbund über die Schneidkante in dem Anschlußgehäuseteil verhakt. Der Ringbund dringt also über seine scharfe Außenkante in das Anschlußgehäuseteil ein. Des weiteren hat der Ringbund eine Dichtfunktion. Der Ringbund kann so ausgelegt sein, daß er an der in Einpreßrichtung liegenden Flanke eine Einpreßschräge und an der entgegengesetzten Flanke eine im wesentlichen radial angeordnete Ringfläche aufweist.

Die Adapterbuchse kann zur Aufnahme einer Steckanschlußbuchse ausgebildet sein. Diese Steckanschlußbuchse ist zur Aufnahme eines Steckanschlusses mit einem Durchmesser geeignet, der geringer ist als der Durchmesser einer Steckanschlußbuchse, die direkt in dem Aufnahmeraum des Anschlußgehäuseteils fixierbar ist. Es ist natürlich auch denkbar, die Adapterbuchse derart auszulegen, daß sie zur Aufnahme einer Gewindebuchse dient.

Die Anschlußbuchse ist auf vorteilhafte Weise mit mindestens einer Verdrehsicherung ausgebildet, die in eine Ausnehmung des Anschlußgehäuseteils eingreift. Dies ist insbesondere bei einer Gewindebuchse vorteilhaft, damit die anzuschließende Leitung mit dem erforderlichen Drehmoment angezogen werden kann, ohne daß sich hierbei die Gewindebuchse in dem Aufnahmeraum mitdreht.

Bei einer bevorzugten Ausführungsform der Vorrichtung nach der Erfindung ist die Verdrehsicherung als mindestens ein Zapfen ausgebildet. Der Zapfen ist vorzugsweise an einer Stirnseite der Anschlußbuchse vorgesehen, welche in dem Anschlußgehäuseteil angeordnet ist. Vorzugsweise hat die Anschlußbuchse zwei derartige Zapfen.

Der Zapfen kann einen sich an die Anschlußbuchse anschließenden Kanal des Anschlußgehäuseteils seitlich begrenzen. Bei ausgebauter Anschlußbuchse schließt sich damit die Ausnehmung für den Zapfen direkt an diesen Kanals an.

Das Anschlußgehäuseteil kann aus Kunststoff gefertigt sein und ist in diesem Fall ein Spritzgießteil. Für jeden Anschlußbuchsentyp kann dieselbe Spritzgießform eingesetzt werden. Das aus Kunststoff gefertigte Anschlußgehäuseteil kann gegebenenfalls mit einer Glasfaserverstärkung versehen sein. Es ist auch denkbar, daß das Anschlußgehäuseteil aus Aluminium oder einem anderen metallischen Werkstoff besteht.

Die Anschlußbuchse ist vorzugsweise aus einem metallischen Werkstoff, beispielsweise aus Messing, gefertigt.

Bei einer bevorzugten Ausführungsform der Vorrichtung nach der Erfindung ist das Gehäuseanschlußteil eine Anschlußplatte eines Pneumatikventils.

Weitere Vorteile und vorteilhafte Weiterbildungen des Gegenstandes nach der Erfindung ergeben sich aus der Beschreibung, der Zeichnung und den Patentansprüchen.

### Zeichnung

Ein Ausführungsbeispiel der Vorrichtung nach der Erfindung ist in der Zeichnung schematisch vereinfacht dargestellt und wird in der nachfolgenden Beschreibung näher erläutert. Es zeigen
Figur 1 eine Anschlußplatte eines Pneumatikventils mit zwei Gewindebuchsen in einem Längsschnitt;
Figur 2 die Anschlußplatte nach Figur 1 in einer Schnittdarstellung entlang der Linie II-II in Figur 1;
Figur 3 eine Gewindebuchse in einer perspektivischen Darstellung;
Figur 4 die Anschlußplatte nach Figur 1 mit zwei Steckanschlußbuchsen; und
Figur 5 die Anschlußplatte nach Figur 1 mit zwei Adapterbuchsen für jeweils eine Steckanschlußbuchse.

### Beschreibung des Ausführungsbeispiels

Das in der Zeichnung dargestellte Ausführungsbeispiel zeigt einen Bereich einer Anschluß- bzw. Adapterplatte 1 eines hier nicht näher dargestellten Pneumatikventils und dient zum Anschluß zweier hier ebenfalls nicht näher dargestellter Pneumatikleitungen.

Die Anschlußplatte 1, die aus Kunststoff gefertigt ist, stellt ein sogenanntes Anschlußgehäuseteil dar und weist zwei Aufnahmeräume 4 und 5 auf, welche zur Aufnahme verschiedenartig gestalteter Anschlußbuchsen ausgelegt sind, einen im wesentlichen kreisrunden Querschnitt aufweisen und an die sich jeweils ein Kanal 14 bzw. 15 anschließt, welcher in der Anschlußplatte 1 ausgebildet ist.

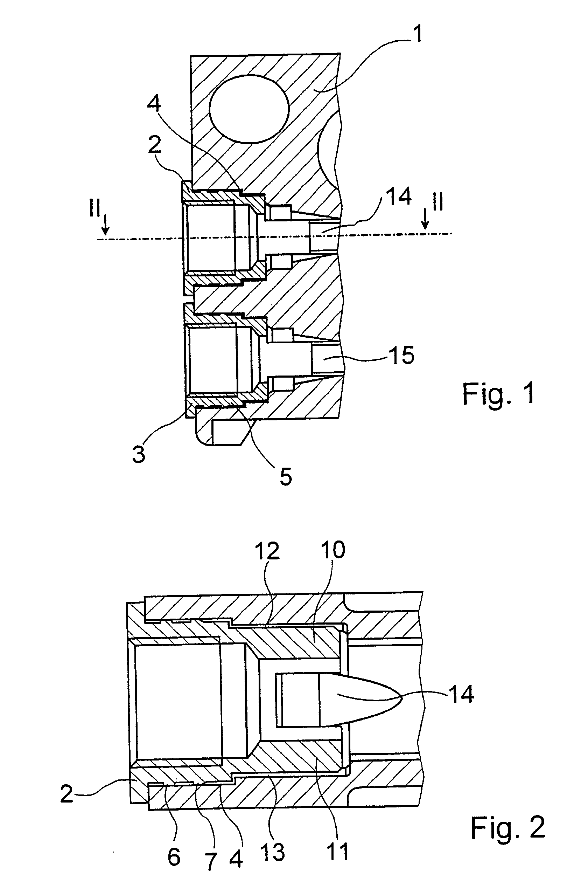

Bei dem in den Figuren 1 und 2 dargestellten Anwendungsfall ist in den beiden Aufnahmeräumen 4 und 5 jeweils eine als Gewindehülse 2 bzw. 3 ausgebildete Anschlußbuchse angeordnet, welche aus Messing gefertigt ist.

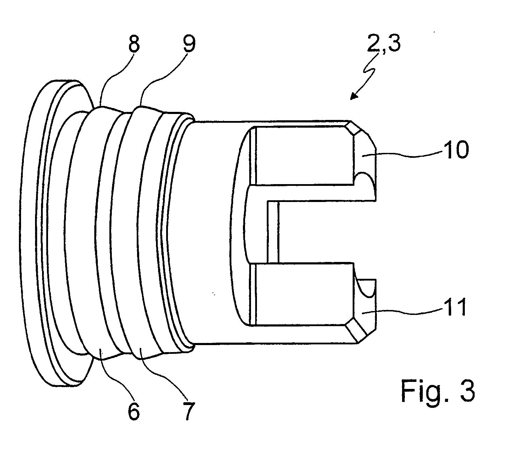

Wie insbesondere Figur 3 zu entnehmen ist, weisen die Gewindehülsen 2 und 3 jeweils zwei am Umfang angeordnete Ringbünde 6 und 7 auf, welche mit einer sogenannten Schneidkante 8, 9 ausgebildet sind, so daß ein Verhaken in der aus Kunststoff gefertigten Anschlußplatte 1 im Bereich der Aufnahmeräume 4, 5 gewährleistet ist und die Gewindehülsen 2 und 3 gegen Auspressen gesichert sind. Die Gewindehülsen 2 und 3 sind jeweils als Einpreßbuchse ausgebildet und nach einem Einpreßverfahren in der Anschlußplatte 1 montiert. Des weiteren dienen die Ringbünde 6 und 7 zur Dichtung der Anschlußplatte 1 gegenüber der Umgebung.

An einer innerhalb der Anschlußplatte 1 angeordneten Stirnseite weisen die Gewindehülsen 2, 3 jeweils zwei Zapfen 10 und 11 auf. Die Zapfen 10 und 11 greifen in dem in den Figuren 1 und 2 dargestellten Einbauzustand in Ausnehmungen 12 und 13 ein, die sich jeweils an die Aufnahmeräume 4, 5 der Anschlußplatte 1 sowie an die Kanäle 14, 15 anschließen, die in der Anschlußplatte 1 ausgebildet sind und mit denen die jeweils nicht dargestellten pneumatischen Leitungen über die Gewindehülsen 2, 3 verbindbar sind. Die Zapfen 10 und 11, die als Verdrehsicherung der Gewindehülsen 2, 3 dienen, begrenzen die Kanäle 14, 15 seitlich.

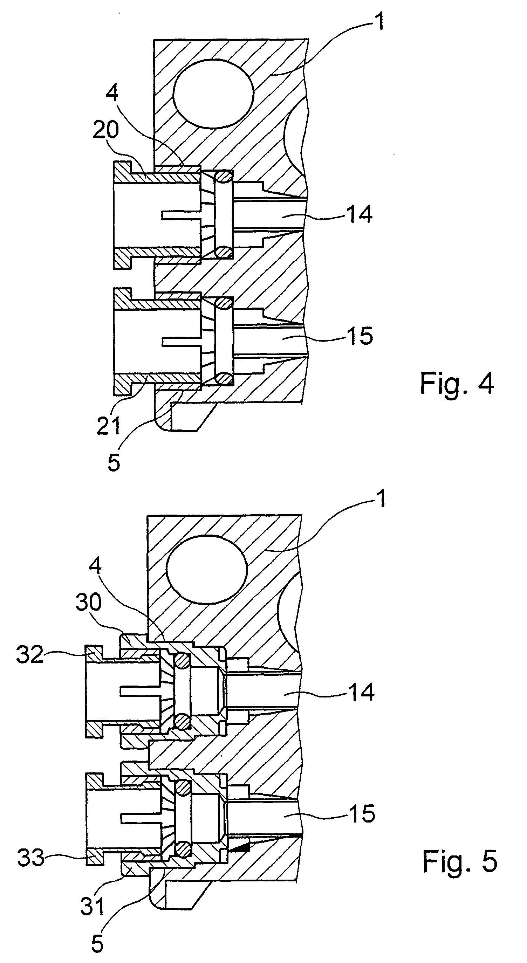

Bei dem in Figur 4 dargestellten Anwendungsfall ist in den Ausnehmungen 4 und 5 der Anschlußplatte 1 jeweils eine Steckanschlußbuchse 20 bzw. 21 angeordnet, die zum Anschluß eines am Ende einer pneumatischen Leitung vorgesehenen Steckverbinders mit einem Durchmesser von 8 mm geeignet ist.

Bei dem in Figur 5 dargestellten Anwendungsfall ist in den Ausnehmungen 4 und 5 der Anschlußplatte 1 jeweils eine Adapterbuchse 30 bzw. 31 angeordnet, die zur Aufnahme einer Steckanschlußbuchse 32 bzw. 33 dient, welche zum Verbinden mit einem an einer pneumatischen Leitung angeordneten Steckverbinder ausgelegt ist, der einen Durchmesser von 6 mm aufweist.

Die Außenkonturen der Adapterbuchsen 30 und 31 sowie diejenigen der Steckanschlußbuchsen 20 und 21 entsprechen im wesentlichen den Außenkonturen der Gewindebuchsen 2 und 3. Die Adapterbuchsen 30, 31 und die Steckanschlußbuchsen 20, 21 sind ebenfalls mit einer nicht dargestellten Verdrehsicherung ausgebildet.

Es versteht sich, daß die Erfindung nicht auf das dargestellte Ausführungsbeispiel beschränkt ist. Vielmehr kann es sich statt um eine Anschlußplatte eines Pneumatikventils auch um ein beliebiges Anschlußgehäuseteil einer sonstigen pneumatischen Baueinheit, wie beispielsweise eines Steuerblocks, handeln.

Darüber hinaus besteht die Möglichkeit, in den Aufnahmeräumen 4, 5 Kombinationen der verschiedenen vorgenannten Anschlüsse vorzusehen. Die ist mit den aus der Praxis bekannten Anschlußplatten nicht realisierbar, da bisher bestimmte Anschlußtypen, d. h. Schraubanschlüsse oder Steckanschlüsse mit unterschiedlichen Durchmessern jeweils nur an speziell dafür ausgeführten Anschlußplatten angeschlossen werden konnten.

## Patentansprüche

1. Vorrichtung zur Verbindung mindestens einer pneumatischen Leitung mit einer pneumatischen Baueinheit, umfassend mindestens ein Anschlussgehäuseteil (1), das mindestens einen Aufnahmeraum (4, 5) und eine zugeordnete Anschlussbuchse (2, 3; 20, 21; 30, 31) aufweist, wobei der Aufnahmeraum (4, 5) zur wahlweisen Aufnahme einer als Steckanschlussbuchse (20, 21) als Adapterbuchse (30, 31) oder als Gewindebuchse (2, 3) ausgelegten Anschlussbuchse ausgebildet ist,
**dadurch gekennzeichnet, dass** die Anschlussbuchse (2, 3) mindestens eine Verdrehsicherung (10, 11) aufweist, die in eine Ausnehmung (12, 13) des Anschlussgehäuseteils (1) eingreift, wobei die Verdrehsicherung als mindestens ein Zapfen (10, 11) ausgebildet ist, der einen sich an die Anschlussbuchse (2, 3) anschließenden Kanal (14, 15) des Anschlussgehäuseteils (1) seitlich begrenzt.

2. Vorrichtung nach Anspruch 1,
**dadurch gekennzeichnet, dass** die Anschlussbuchse (2, 3; 20, 21; 30, 31) als Einpressbuchse ausgebildet ist.

3. Vorrichtung nach Anspruch 1 oder 2,
**dadurch gekennzeichnet, dass** die Anschlussbuchse (2, 3; 20, 21; 30, 31) an der Umfangsfläche mindestens einen Ringbund (6, 7) aufweist, der vorzugsweise mit einer Schneidkante (8, 9) ausgebildet ist.

4. Vorrichtung nach einem der Ansprüche 1 bis 3,
**dadurch gekennzeichnet, dass** die Anschlussbuchse (30, 31) zur Aufnahme einer Steckanschlussbuchse (32, 33) ausgebildet ist.

5. Vorrichtung nach Anspruch 1,
**dadurch gekennzeichnet, dass** der Zapfen (10, 11) an einer in dem Anschlussgehäuseteil (1) angeordneten Stirnseite der Anschlussbuchse (2, 3) ausgebildet ist.

6. Vorrichtung nach Anspruch 1,
**dadurch gekennzeichnet, dass** das Anschlussgehäuseteil (1) aus Kunststoff gefertigt ist.

7. Vorrichtung nach Anspruch 1,
**dadurch gekennzeichnet, dass** die Anschlussbuchse (2, 3; 20, 21; 30, 31) aus einem metallischen Werkstoff, vorzugsweise aus Messing, gefertigt ist.

8. Pneumatikventil, mit einer Vorrichtung nach einem der vorstehenden Ansprüche.

## Claims

1. An apparatus for connecting at least one pneumatic pipe with a pneumatic unit, comprising at least one connecting housing portion (1) including at least one receiving space (4, 5) and a corresponding connecting sleeve (2, 3; 20, 21; 30, 31), wherein the receiving space (4, 5) is formed so that it receives a connecting sleeve optionally configured as a plug connecting sleeve (20, 21), as an adapter sleeve (30, 31), or as a threaded sleeve (2, 3),
**characterised in that** the connecting sleeve (2, 3) has at least one anti-twist protection (10, 11), which engages a recess (12, 13) of the connecting housing portion (1), wherein the anti-twist protection is configured as at least one stud (10, 11), which laterally defines a channel (14, 15) of the connecting housing portion (1), extending from the connecting sleeve (2, 3).

2. The apparatus according to claim 1,
**characterised in that** the connecting sleeve (2, 3; 20, 21; 30, 31) is configured as a push-in sleeve.

3. The apparatus according to claim 1 or 2,
**characterised in that** connecting sleeve (2, 3; 20, 21; 30, 31) has at least one collar (6, 7) on its circumferential surface which is preferably provided with a cutting edge (8, 9).

4. The apparatus according to any one of claims 1 to 3,
**characterised in that** the connecting sleeve (30, 31) is arranged to receive a plug connecting sleeve (32, 33).

5. The apparatus according to claim 1,
**characterised in that** the stud (10, 11) is formed on an end face of the connecting sleeve (2, 3), arranged in the connecting housing portion (1).

6. The apparatus according to claim 1,
**characterised in that** the connecting housing portion (1) is made of plastic.

7. The apparatus according to claim 1,
**characterised in that** the connecting sleeve (2, 3; 20, 21; 30, 31) is made of a metallic material, preferably brass.

8. A pneumatic valve comprising an apparatus according to any one of the preceding claims.

## Revendications

1. Dispositif pour relier au moins une conduite pneumatique à une unité structurelle pneumatique, comportant au moins une partie de boîtier de raccordement (1) qui comprend au moins une chambre de réception (4, 5) et une douille de raccordement associée (2, 3 ; 20, 21 ; 30, 31), la chambre de réception (4, 5) étant réalisée pour la réception optionnelle d'une douille de raccordement conçue sous la forme d'une douille de raccordement à enfichage (20, 21), d'une douille formant adaptateur (30, 31) ou d'une douille taraudée (2, 3), **caractérisé en ce que** la douille de raccordement (2, 3) comprend au moins un organe anti-rotation (10, 11) qui s'engage dans un évidement (12, 13) de la partie de boîtier de raccordement (1), l'organe anti-rotation étant réalisé sous la forme d'au moins un tenon (10, 11) qui délimite latéralement un canal (14, 15) de la partie de boîtier de raccordement (1), canal qui se raccorde à la douille de raccordement (2, 3).

2. Dispositif selon la revendication 1, **caractérisé en ce que** la douille de raccordement (2, 3 ; 20, 21 ; 30, 31) est réalisée sous la forme d'une douille à enfoncer.

3. Dispositif selon l'une ou l'autre des revendications 1 et 2, **caractérisé en ce que** la douille de raccordement (2, 3 ; 20, 21 ; 30, 31) présente sur la surface périphérique au moins un collier annulaire (6, 7) qui est réalisé de préférence avec une arête tranchante (8, 9).

4. Dispositif selon l'une des revendications 1 à 3, **caractérisé en ce que** la douille de raccordement (30, 31) est réalisée pour recevoir une douille de raccordement à enfichage (32, 33).

5. Dispositif selon la revendication 1, **caractérisé en ce que** le tenon (10, 11) est réalisé sur une face frontale de la douille de raccordement (2, 3), face qui est agencée dans la partie de boîtier de raccordement (1).

6. Dispositif selon la revendication 1, **caractérisé en ce que** la partie de boîtier de raccordement (1) est fabriquée en matière plastique.

7. Dispositif selon la revendication 1, **caractérisé en ce que** la douille de raccordement (2, 3 ; 20, 21 ; 30, 31) est fabriquée en un matériau métallique, de préférence en laiton.

8. Valve pneumatique, comportant un dispositif selon l'une des revendications précédentes.
